# EUROPEAN PATENT SPECIFICATION

(11) **EP 1 057 752 B1**
(45) Date of publication and mention of the grant of the patent: **31.08.2005**
(21) Application number: 99201764.0
(22) Date of filing: 04.06.1999
(51) Int. Cl.: B65D 85/64, G06F 17/60

(54) **A system and a method of the reclycing of product carrier units and a recyclable product carrier unit suitable for such system**
System und Verfahren zur Wiederverwendung von Trägereinheiten und für ein solches System angepasste Trägereinheit
Système et méthode pour le recyclage d'unités de support de produits et unité de support de produit adapté à un tel système

(43) Date of publication of application: 06.12.2000
(73) Proprietor: EmbaCycle A/S, 8543 Hornslet (DK)
(72) Inventor: Krogh, Jesper, 8471 Sabro (DK); Kofoed, Ralph, 8543 Hornslet (DK); Clausen,Christian Lichon, 9400 Norresundby (DK)
(74) Representative: Elmeros, Claus

(56) References cited:
- DE-U- 9 201 417
- FR-A- 2 697 801
- US-A- 5 662 048
- US-A- 5 699 259

## Description

The present invention relates to a recyclable product carrier unit for protective wrapping of a product, a method of recycling one or more product carrier units, a method and a system for management of the recycling of product carrier units.

In resent years an increased demand for recycling of packaging material has been present in order to reduce environmental pollution and to reduce the material consumption associated with the packaging of produce of manufactures.

These demands have resulted in the design of more and more recyclable or environmentally friendly disposable product-specific packaging material in cardboard, paper and similar recyclable and/or biodegradable materials.

Recyclable packaging material, such as paper or cardboard, is today collected after use, and returned to the paper mill for reuse of the paper fibres in new products, e.g. new packaging material. Similarly, more and more bottles and jars are collected and returned to glass works for melting and reuse in new products.

In order to benefit from the environmentally friendly reuse of the packaging material more and more wrappings are today being made totally or at least partly of such recyclable material.

However, the amount of recyclable material that is actually returned for recycling is somewhat limited since the end users might choose to dispose themselves of the no longer needed packaging material is more opportune ways than returning the material to a collecting point. In order to encourage both product consumers, distributors and manufactures to return material for recycling authorities have introduced various systems of taxation on the consumption on the packaging material.

For consumer products of uncomplicated structure, such as some types of bottles and transport crates for such bottles there are existing many systems where the consumer pays an additional deposit on standardised product carrier units, such as beer crates, bottles on top of the price for the product. This deposit is then refunded when the packaging material is returned to the outlet. Such systems have proven successful in achieving an acceptable high return rate on container for beverages, such as bottles and cans.

However, the costs associated with the recycling of packaging material are considerable. The transport and handling of the recycled material involves sorting, loading and unloading the material and transporting it to the recycling plant, where a the cleaning or purification of the material is needed prior to reusing the material in new products, such as manufacture of new packaging material. In these operations a considerable amount of energy is needed, which in turn means that a considerable amount of fossil fuel as well as water is consumed in the recycling processes.

The requirements for the designs of product-specific packaging material is to design a wrapping that offers sufficient protection to the product during handling and transportation containing as little material as possible, where as much of the material as possible is recyclable, and where the weight of the packaging is as low as possible, in order to save freight costs.

The balance between these now and then contradicting requirements is different from product type to product type. For more bulky and/or more complicated products, such as washing machines, refrigerators and the like, cardboard boxes with protective form-shaped fittings inside, and or a plastic foil wrapping is often used in order to achieve an adequate protection with a low weight of the packaging material.

Typically, cardboard boxes of such size are inconvenient to dispose for the end user, which often result in that such packaging material is never returned although being suitable therefore.

French patent application no. FR-A 2 697 801 describes a standard pallet equipped with a transponder. The transponder is a single unit including an antenna and limited data storage. The unit may be activated by sending a radio electric impulse of power to the antenna of the transponder unit in which the impulse charges power supply means in the unit. The transponder unit will hereafter respond with the fixed content of the data storage.

The object of the present invention is to provide an improved method and system for the recycling of packaging material or product carrier units. Moreover, it is an object of the present invention to provide a recyclable product carrier unit suitable for such system.

This object is mainly achieved by the method claimed in claim 1, the system claimed in claim 9 and the product carrier unit claimed in claim 15.

Hereby, an intelligent packaging material that is recyclable is provided that offers new possibilities in terms of providing more efficient and environmentally friendly packaging material systems. By a product carrier unit according to the invention, a protective packaging for products of more complex structure where all the packaging material is returned to the point of manufacture. By the invention a product carrier unit for more bulky products, e.g. washing machines, refrigerators, personal computers, television sets, etc. can be individually designed for accommodating a specific size of a product. The product carrier units can nevertheless be handled in a common recycling system.

The product carrier unit according to the invention is assembled around the product and can be disassembled after having accommodated the product to the end location. This means that the space required for returning the recyclable package for reuse is considerably reduced. In addition, the individual parts making up the product carrier unit according to the invention can be exchanged if they are worn or damaged. Likewise, e.g. the distance means can be exchanged if the actual reuse requires a different size of the product carrier unit. Hereby, the product carrier unit of the invention is provided with a longer duration and with a flexibility making the recyclable product carrier unit usable for many different purposes.

The data carrier unit can be supplied with information about the type of product, e.g. if it is a customised product, the customer, transport data, manufacturing data, etc.

The distance means are in a preferred embodiment made up by a number of frame bars, and wherein said base member and said enclosure member are configured in a polygon shape and comprise a corner element for each corner of the polygon and a number of frame elements connecting said corner elements, where at least one corner element comprises the data carrier unit. Furthermore, the base member is preferably rectangular and the product carrier unit is assembled into a box-shape.. This frame structure provides a good protection to cubic-like formed products, protecting the edges and the corners thereof. Each frame bar is assembled with a corner element of the base member and of the enclosure member, making the frame simple to assemble and dismantle around the product.

One or more of the openings circumscribed by the frame bars can be provided with a plate member, that further could be fitted with a resilient material on the inside, such as a foam material provided with a shape corresponding to the product to be wrapped for providing protective support for this product. When the frame members are made in a plastic material, such as polyethylene or the like, or made of metal, the inside edges and/or corners of the frame structure can hereby offer a resilient and chock absorbing accommodation of the product inside.

The base member of said product carrier unit is an assembly tray during the manufacture of the product, and the subsequent packaging is built on said base member around the finished product, and that the data carrier unit contains and is updated with information about the status of the assembly. Hereby, the product can be built on the base of the transport packaging making use of the same data carrier unit on said base.

In a further aspect of the invention there is provided a method of recycling one or more product carrier units according to any of the previous claims, comprising the steps of assembling the product carrier unit around a product, and recording product and location related information data in the data carrier unit, storing one or more packages of recyclable product carrier unit with the product in a warehouse or the like, updating the location data in the data carrier unit, loading one or more packages onto transport means for distributing the packages to a determined location, and updating the location data in the data carrier unit, disassembling the product carrier unit and removing the product therefrom, and collecting the recyclable empty product carrier unit at a distribution point, where the product carrier means are inspected, reconditioned, such as washed or refitted with a new component, if necessary, and sorted, before being transported to a manufacturing site for reuse.

Hereby the data carrier unit incorporated in the product carrier unit provides the distinctive flexibility in the handling of the product carrier units and their reuse.

The product can, as indicated above, be assembled on a base member of the product carrier unit on the assembly line of a manufacturing process, prior to the assembly of the product carrier unit around the product, and that the data carrier unit is provided in the base member and releases information data requesting a production system for components for the assembly of the product.

The present invention further consist of a system and a method of management of the recycling of product carrier units for protective wrapping of a product wherein the product carrier unit is provided with a data carrier unit for receiving and releasing information data, including identification code, comprising the steps of monitoring the inventory status of product carrier units at one or more manufacturing sites by first computer means registering the identification code of the product carrier units, and determining the supply and demand of product carrier units, monitoring the inventory status of product carrier units at one or more distribution points by second computer means registering the identification code of the product carrier units, and determining the stock of returning product carrier units, and recording the conditions of the individual product carrier units, feeding said inventory status of the manufacturing and distribution sites to central computer means, that initiate a distribution of the returned product carrier units at the distribution points according to the demands from the manufacturing site.

By using the data carrier unit supplying it with data and reading said data at various points the whole recycling cycle can be monitored. Hereby, the distribution and the amount and demands for units at various points in the cycle can be managed making the distribution more effective, i.e. less time consuming.

The consumption and supply of product carrier units are in the preferred embodiment of this aspect of the invention registered at each of the manufacturing sites, distribution points and in total by the first, second and central computer means respectively. Hereby, the recycling can be managed both locally at each of the locations of the recyclable product carrier units and centrally where an overall view is made up by collecting the relevant data from the individual locations.

In a preferred embodiment, market related information about the consumption of the products carried in the product carrier units is calculated by the central computer means. This means that the recyclable product carrier units with data carrier units can provide valuable data concerning e.g. consumer spending habits, the amount of products sold and variations in product consumption on different markets.

In the preferred embodiment of a system and method for management of recyclable product carrier units, the recycling management of the central computer means involves administrating deposit accounts of the manufacturing sites and the distribution points and debiting and crediting said accounts according to the movement of product carrier units between the site by registering the identification and location data of the product carrier units. By being able to trace the location and direct the movement of the product carrier units according to the first aspect of the invention, the data of the data carrier units can advantageously be used for encouraging the use of the recycling but charging deposits on the individual product carrier units. This could be supplemented with an update information on the location as well as the "current owner", i.e. the one who currently has paid and not yet received his deposit for the unit.

The data carrier unit can as mentioned above further be supplied with manufacturing information data from a source in association with the first computer means and initiating a request to an associated production system for components for the assembly of the product. Said information data supplied to the data carrier unit could include data on the type of product, sub-components, product identification, assembly operations, up-dating on the location, and information of the time of operation and data relating to a quality control in relation to one or more of the sub-operations. The use of the base member of the recyclable product carrier unit as a base for the assembly line of the product manufacture can result in a significant cost reduction also in the assembly process.

The invention will be described in more detail below with reference to the accompanying drawings, in which
- Fig. 1 to 4: are perspective views of a product carrier unit according to a first embodiment of the invention,
- figs. 5 to 7: are schematic flow charts of the recycling process of a product carrier unit and a system for recycling according to the invention, and
- fig. 8: is a schematic presentation of the system for management of the recycling process according to the invention.

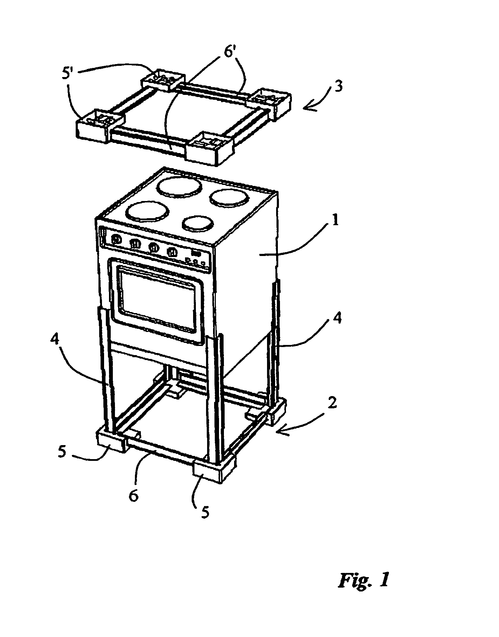

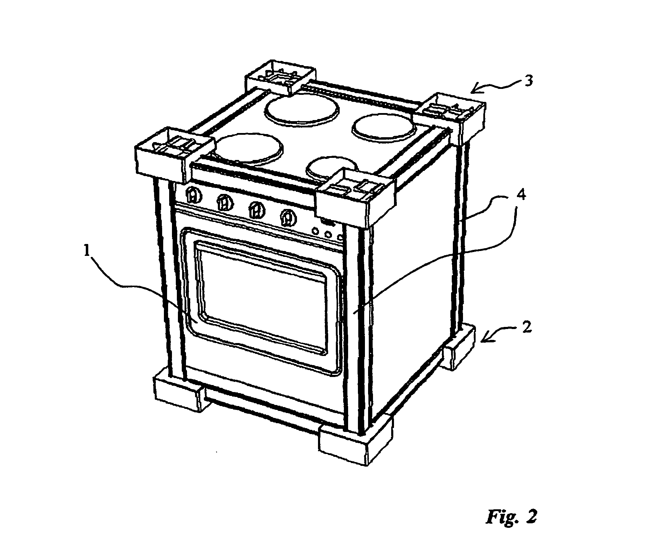

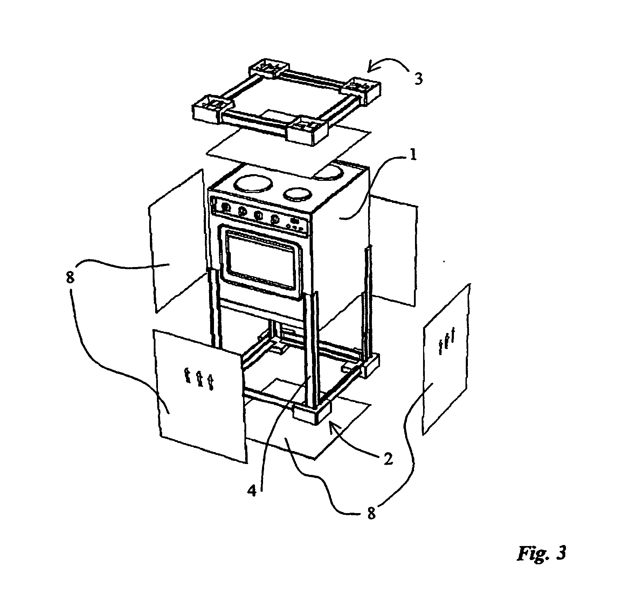

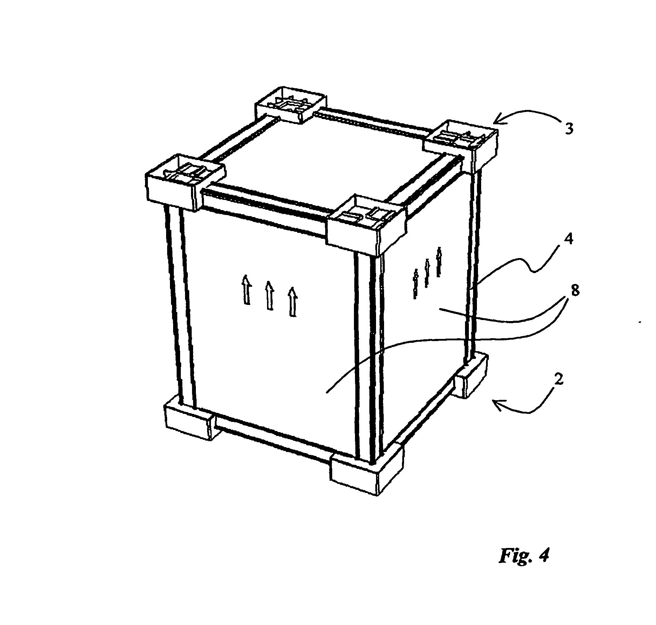

In figs. 1 to 4 a recyclable product carrier unit according a first embodiment of the invention is shown. The product 1, such as a cooker, a washing machine or the like of standardised size is placed on a base member 2 between the distance bars 4 that are attached to the base member 2. A enclosure member 3 encloses the product 1. The base and enclosure members 2, 3 are made up by corner members 5, 5' connected to each other by frame bars 6, 6'. The distance bars 4 and the frame bars 6, 6' are preferably carried out with an L-shaped cross-section for receiving the edges of the product 1.

The distance bars 4, the corner members 5, 5' and the frame bars 6, 6' are preferably made in a durable plastic material, such as polyethylene, or in metal, such as aluminium or steel. For protective purposes, the frame members 4, 5, 5', 6, 6' could also be provided with an inner lining in order to avoid damages to the edge and corner regions of the product 1. Moreover, a protective plate 8 could be placed in the opening between the distance bars 4 and the frame bars 6 on the sides.

The base member 2 and the enclosure member 3 are provided with a data carrier unit 7, such as an EEPROM or an EAPROM, preferably incorporated in one of the corner members 5, 5'. The data carrier unit 7 can receive and release relevant information data about the product contained in the product carrier unit, the location in the recycling system, and other kind of data, such as it can be appreciated from the following description of the recycling system according to the invention making use of the product carrier unit with a data carrier unit.

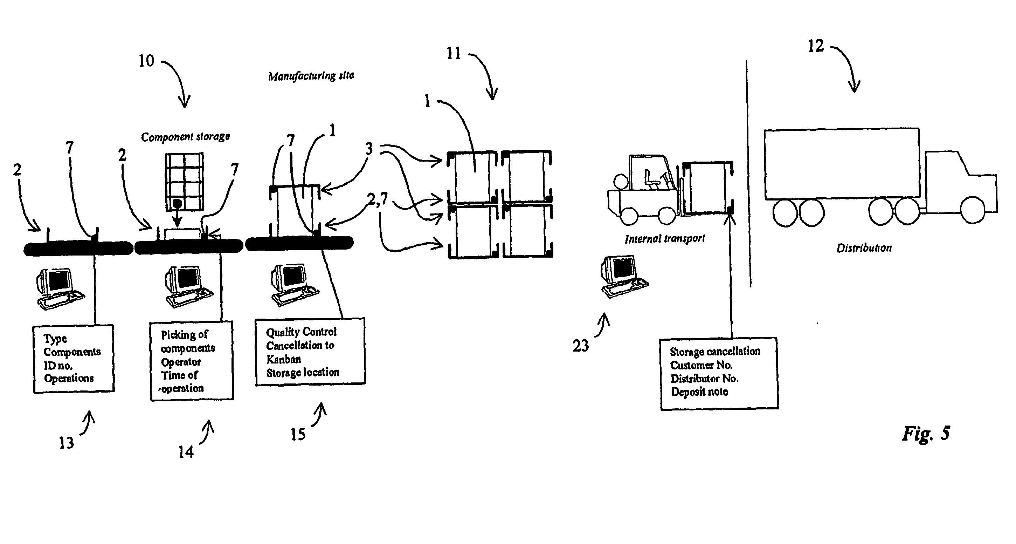

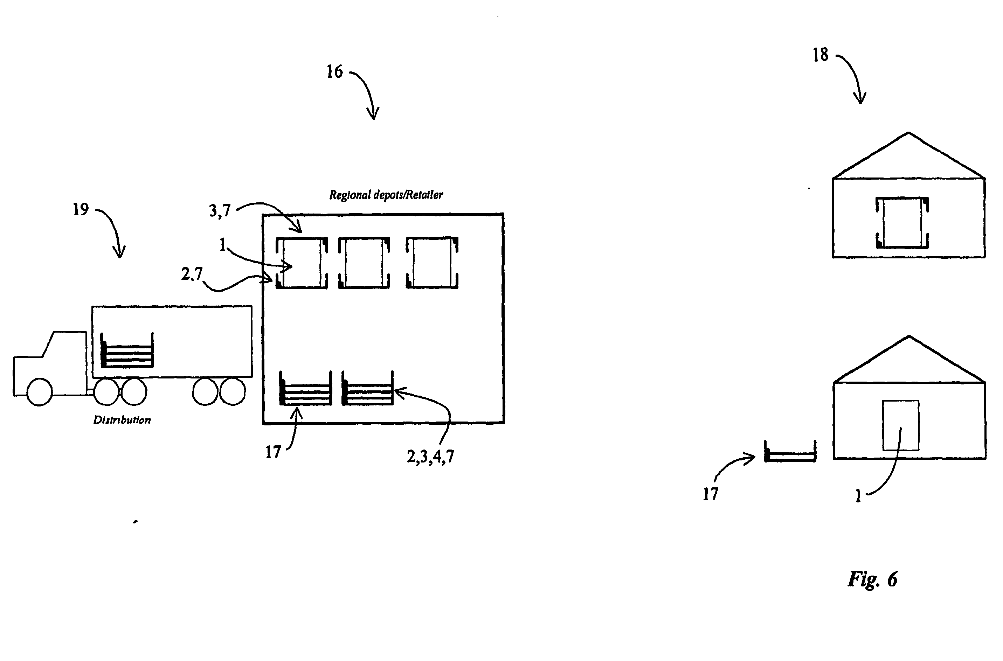

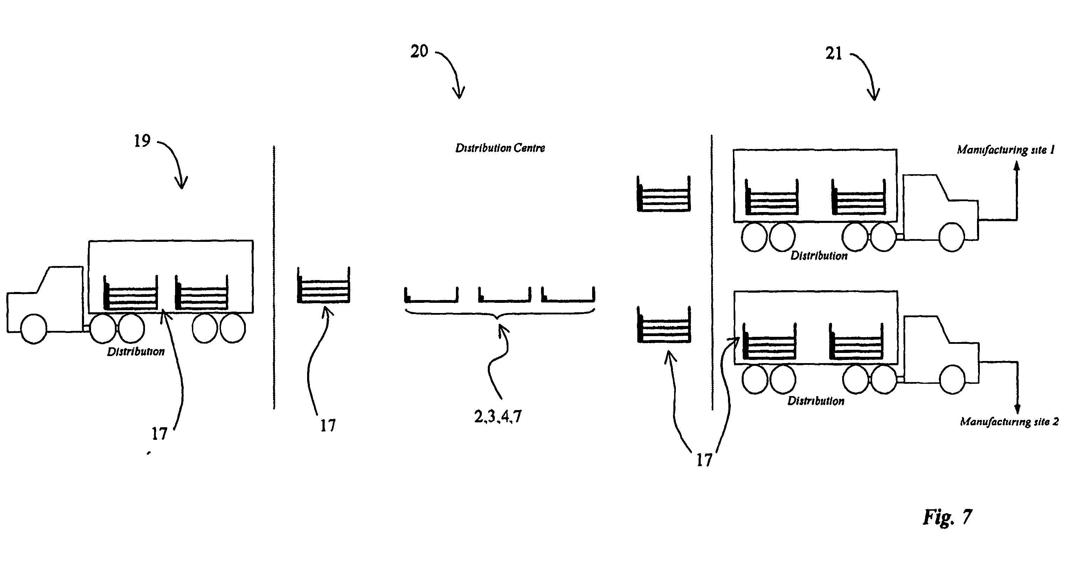

The figures 5 to 7 show the flow of the product carrier units through the recycling process.

In the end of the manufacturing line 10, the individual products 1 are assembled and packaged. In a particular embodiment of the invention, this assembly is carried out using a base member 2 with a data carrier unit 7 according to the recyclable product carrier unit according to the invention. At a first operation station 13 the data carrier unit receives information about the type of product, the components therefore, an individual reference number and the operations that are to be carried out on the assembly line 10.

The product 1 is then assembled on the base member 2 in one or more assembly stations 14, where monitoring means communicate with the data carrier unit 7 and initiates the presence of relevant components for the assembly line, and the data carrier unit 7 and/or the monitoring means can record the operator, the time of operation or production. In a further operation 15, such as a final operation in the assembly line, a quality check is carried out and the product 1 is wrapped for transportation. The recyclable product carrier unit is then assembled around the product 1.

The products 1 in the product carrier units 2,2,7 are then stored in the storage 11 on the manufacturing site. Internal transport means loads the products to transport means 12, such as one or more trucks, containers, etc.. By reading the information on destination and the like in the data carrier units of the product carrier units, the relevant products 1 are distributed to the correct transport means due to leave for the relevant destination.

The products are transported to a retailer or the like 16 from which the product 1 is directed to the end user. After the individual product 1 has reached its final location 18, where it is unpacked, the empty product carrier unit or units 17 are collected and returned to the retailer or another suitable point of sale 17.

From here the empty product carrier units 17 are returned by second transport means 19 to a distribution station 20, where the individual components 2, 3, 4 of the product carrier units are inspected. The components are then washed, replaced or reconditioned in any other suitable manner and sorted according to type and requests from the manufacturing sites 10 before being loaded onto third transport means 21 by which the recycled product carrier units are returned to the manufacturing sites 10.

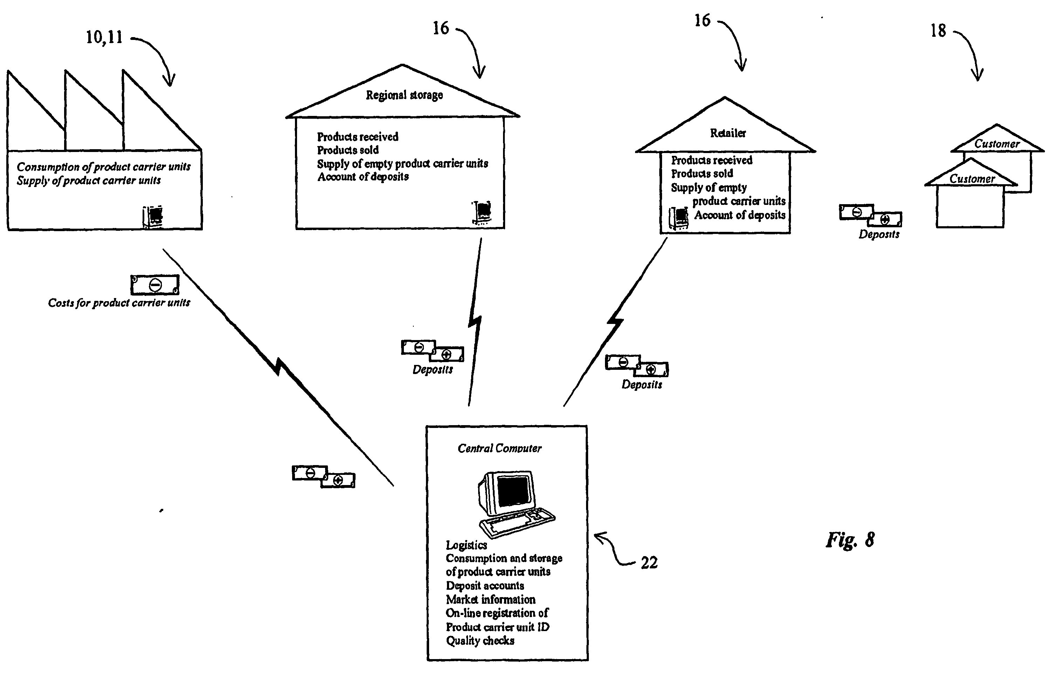

Throughout this cycle the data carrier units 7 of the recyclable product carrier units are updated by relevant information, just as the monitoring means of the manufacturing sites 10, 11, the merchants, regional storage depots and the retailers 16 receive information from the data carrier units 7. This information flow is shown in figure 8.

First computer means of the manufacturing sites estimate the amount of product carrier units needed over a certain period of time, monitor the inventory status of the amount present in house and feed these information data to a central computer 22.

This central computer means 22 also receives information from the merchants, regional depots and retailers 16, such as information data on the products received, the products sold, the amount of empty product carrier units 17 in store and the state of the accounts concerning the deposits paid and received for the product carrier units.

On the basis of the received information the central computer unit 22 monitors the recycling process and manages the system of recycling of the product carrier units, including calculations of the logistics, the storage and consumption of product carrier units, deposit accounts, market information, on-line registration of the identifications of the product carrier units, and carry out checks on the quality of the product carrier units.

Moreover, the central computer means 22 or the first computer means on the manufacturing sites can initiate order for new product carrier units or components thereof, if the amounts available do not meet the required amounts.

By the invention it is realised that the recyclable product carrier unit according to the invention could be used for a variety of products, not only standardised sized products, such as e.g. personal computers, television sets, washing machines and refrigerators, but also for the accommodation of products such as furniture items and the like.

It is also realised by the invention that the base member 2 could be not only horizontally placed during the assembly of the product thereon, but also e.g. vertical or any other position. Accordingly, the enclosing member 3 could be a top member or alternatively enclose the product in the product carrier unit according to the invention in any other way.

## Claims

1. A method of management of the recycling of product carrier units for protective wrapping of a product wherein each product carrier unit is provided with a data carrier unit for receiving and releasing information data,
**characterised by** said information data includes identification code and said method comprising the steps of:
monitoring the inventory status of product carrier units at one or more manufacturing sites (10,11) by first computer means registering the identification code of the product carrier units, and determining the supply and demand of product carrier units,
monitoring the inventory status of product carrier units at one or more distribution points (16) by second computer means registering the identification code of the product carrier units, and determining the stock of returning product carrier units, and recording the conditions of the individual product carrier units,
feeding said inventory status of the manufacturing and distribution sites to central computer means (22), that initiate a distribution of the returned product carrier units at the distribution points according to the demands from the manufacturing site.

2. A method according to claim 1, **characterised by** the consumption and supply of product carrier units are registered at each of the manufacturing sites, distribution points and in total by the first, second and central computer means respectively.

3. A method according to claim 1 or 2, **characterised by** market related information about the consumption of the products carried in the product carrier units is calculated by the central computer means.

4. A method according to claims 1 to 3, **characterised by** the recycling management of the central computer means involves administrating deposit accounts of the manufacturing sites and the distribution points and debiting and crediting said accounts according to the movement of product carrier units between the site by registering the identification and location data of the product carrier units.

5. A method according to claim 1 to 4, **characterised by** the data carrier unit is supplied with manufacturing information data from a source in association with the first computer means and initiating a request to an associated production system for components for the assembly of the product.

6. A method according to claim 5, **characterised by** said information data supplied to the data carrier unit includes data on the type of product, sub-components, product identification, assembly operations, up-dating on the location, and information of the time of operation and data relating to a quality control in relation to one or more of the sub-operations.

7. A method according to claim 1, **characterised by** the steps of
assembling the product carrier unit around a product, and recording product and location related information data in the data carrier unit,
storing one or more packages of recyclable product carrier unit with the product in a warehouse or the like, updating the location data in the data carrier unit,
loading one or more packages onto transport means for distributing the packages to a determined location, and updating the location data in the data carrier unit,
disassembling the product carrier unit and removing the product therefrom, and
collecting the recyclable empty product carrier unit at a distribution point, where the product carrier means are inspected, reconditioned, such as washed or refitted with a new component, if necessary, and sorted, before being transported to a manufacturing site for reuse.

8. A method according to claim 7, **characterised by** the product is assembled on a base member of the product carrier unit on the assembly line of a manufacturing process, prior to the assembly of the product carrier unit around the product, and that the data carrier unit is provided in the base member and releases information data requesting a production system for components for the assembly of the product.

9. A system for management of the recycling of product carrier units for protective wrapping of a product where each product carrier unit is provided with a data carrier unit for receiving and releasing information data,
**characterised in that**
said information data includes identification code,
first computer means monitoring the inventory status of product carrier units at one or more manufacturing sites (10,11) and registering the identification code of the product carrier units, and determining the supply and demand of product carrier units,
second computer means monitoring the inventory status of product carrier units at one or more distribution points (16) and registering the identification code of the product carrier units, and determining the stock of returning product carrier units, and recording the conditions of the individual product carrier units,
central computer means (22) receiving said inventory status of the manufacturing and distribution sites, and initiating a distribution of the returned product carrier units at the distribution points according to the demands from the manufacturing site.

10. A system according to claim 9, **characterised in that** the consumption and supply of product carrier units is registered at each of the manufacturing sites, distribution points and in total by the first, second and central computer means respectively.

11. A system according to claim 9 or 10, **characterised in that** market related information about the consumption of the products carried in the product carrier units is calculated by the central computer means.

12. A system according to claims 9 to 11, **characterised in that** the recycling management of the central computer means involves administrating deposit accounts of the manufacturing sites and the distribution points and debiting and crediting said accounts according to the movement of product carrier units between the site by registering the identification and location data of the product carrier units.

13. A system according to claim 9 to 12, **characterised in that** the data carrier unit is supplied with manufacturing information data from a source in association with the first computer means and initiating a request to an associated production system for components for the assembly of the product.

14. A system according to claim 13, **characterised in that** said information data supplied to the data carrier unit includes data on the type of product, sub-components, product identification, assembly operations, up-dating on the location, and information of the time of operation and data relating to a quality control in relation to one or more of the sub-operations.

15. A recyclable product carrier unit to be used in a system for management of the recycling of product carrier units according to any of claims 9 to 14, said product carrier unit comprising a base member (2) and a enclosure member (3) that are detachably assembled by distance means (4) for enclosing the product where at least the base member comprises a data carrier unit (7) for receiving and releasing information data related to the content of the product carrier unit, destination and location data **characterised in that** the base member (2) of said product carrier unit is also an assembly tray during the manufacture of the product, where the subsequent packaging is built on said base member around the finished product, and where the data carrier unit contains and is updated with information about the status of the assembly.

16. A recyclable product carrier unit according to claim 15, **characterised in that** the distance means (4) is made up by a number of frame bars, and wherein said base member and said enclosure member are configured in a polygon shape and comprise a coner element (5) for each corner of the polygon and a number of frame elements (6) connecting said corner elements, where at least one corner element comprises the data carrier unit (7).

17. A recyclable product carrier unit according to claim 16, **characterised in that** each frame bar is assembled with a corner element of the base member and of the top member.

18. A recyclable product carrier unit according to claim 16 or 17, **characterised in that** the base member is rectangular and the product carrier unit is assembled into a box-shape.

19. A recyclable product carrier unit according to any of the claims 16 to 18, **characterised in that** one or more of the openings circumscribed by the frame bars is provided with a plate member, that further could be fitted with a resilient material on the inside, such as a foam material provided with a shape corresponding to the product to be wrapped for providing protective support for this product.

## Patentansprüche

1. Verfahren für das Management des Recyclings von Produkttransporteinheiten für das schützende Verpacken eines Produktes, wobei jede Produkttransporteinheit mit einer Datenträgereinheit zum Empfangen und Abgeben von Informationsdaten versehen ist,
**dadurch gekennzeichnet, dass** die Informationsdaten einen Identifikationskode umfassen und das Verfahren die folgenden Schritte umfasst:
Überwachen des Inventarstatus der Produkttransporteinheiten an einem oder mehreren Herstellungsorten (10, 11), indem erste Computermittel den Identifikationskode der Produkttransporteinheiten registrieren und die Zufuhr von und die Nachfrage nach Produkttransporteinheiten bestimmen,
Überwachen des Inventarstatus der Produkttransporteinheiten an einem oder mehreren Distributionspunkten (16), indem zweite Computermittel den Identifikationskode der Produkttransporteinheiten registrieren und den Vorrat an returnierenden Produkttransporteinheiten bestimmen und die Zustände der einzelnen Produkttransporteinheiten aufnehmen,
Zuführen des Inventarstatus der Herstellungs- und Distributionsorte an zentrale Computermittel (22), die eine Verteilung der returnierten Produkttransporteinheiten an den Distributionspunkten entsprechend den Nachfragen von dem Herstellungsort einleiten.

2. Verfahren nach Anspruch 1, **dadurch gekennzeichnet, dass** der Verbrauch und die Zufuhr von Produkttransporteinheiten an jedem der Herstellungsorte, Distributionsorte und gesamt von den ersten, zweiten bzw. zentralen Computermitteln registriert werden.

3. Verfahren nach Anspruch 1 oder 2, **dadurch gekennzeichnet, dass** marktbezogene Informationen über den Verbrauch der Produkte, die in den Produkttransporteinheiten transportiert werden, von den zentralen Computermitteln berechnet werden.

4. Verfahren nach einem der Ansprüche 1 bis 3, **dadurch gekennzeichnet, dass** das Recylingmanagement der zentralen Computermittel das Verwalten von Anlagekonten der Herstellungsorte und der Distributionspunkte und ein Belasten der und Gutschreiben auf den Konten entsprechend der Bewegung der Produkttransporteinheiten zwischen den Orten durch Registrieren von Identifikations- und Positionsdaten der Produkttransporteinheit umfasst.

5. Verfahren nach einem der Ansprüche 1 bis 4, **dadurch gekennzeichnet, dass** die Datenträgereinheit von einer Quelle in Verbindung mit den ersten Computermitteln mit Herstellungsinformationsdaten versorgt wird und an ein verbundenes Produktionssystem für Komponenten zum Zusammensetzen des Produktes eine Anfrage einleitet.

6. Verfahren nach Anspruch 5, **dadurch gekennzeichnet, dass** dieder Datenträgereinheit zugeführten Informationsdaten Daten über den Produkttyp, Unterbauteile, Produktidentifikation, Montagetätigkeiten, Aktualisierungen hinsichtlich der Position und Informationen über die Betriebszeit und Daten, die ein Qualitätskontrolle in Bezug auf eine oder mehrere der Untervorgänge betreffen, umfasst.

7. Verfahren nach Anspruch 1, **gekennzeichnet durch** die Schritte
Montieren der Produkttransporteinheit um ein Produkt herum und Aufnehmen von produkt- und positionsbezogenen Informationsdaten in die Datenträgereinheit,
Lagern von einem oder mehreren Paketen der wiederverwendbaren Produkttransporteinheit mit dem Produkt in einem Lager oder ähnlichem, wobei die Positionsdaten in der Datenträgereinheit aktualisiert werden,
Laden von einem oder mehreren Pakete auf Transportmittel, um die Pakte an einen festgelegten Ort zu verteilen, und Aktualisieren der Positionsdaten in der Datenträgereinheit,
Auseinandernehmen der Produkttransporteinheit und Entfernen des Produktes daraus, und
Sammeln der wiederverwendbaren leeren Produkttransporteinheit an einem Distributionspunkt, wo die Produkttransportmittel überprüft, überholt, wie z.B. gewaschen oder mit einer neuen Komponente nachgerüstet, wenn erforderlich, und sortiert werden, bevor sie zur Wiederverwendung zu einem Produktionsort gebracht werden.

8. Verfahren nach Anspruch 7, **dadurch gekennzeichnet, dass** das Produkt auf einem Grundelement der Produkttransporteinheit auf dem Fließband eines Herstellungsverfahrens vor der Montage der Produkttransporteinheit um das Produkt montiert wird und dass die Datenträgereinheit in dem Grundelement vorgesehen ist und Informationsdaten abgibt, wobei ein Herstellungssystem für Komponenten für die Montage des Produktes angefragt wird.

9. System für das Management des Recyclings von Produkttransporteinheiten für eine schützende Verpackung eines Produktes, wobei jede Produkttransporteinheit mit einer Datenträgereinheit zum Empfangen und Abgeben von Informationsdaten versehen ist,
**dadurch gekennzeichnet, dass**
die Informationsdaten einen Identifikationskode umfassen,
wobei erste Computermittel den Inventarstatus der Produkttransporteinheiten an einem oder mehreren Herstellungsorten (10, 11) überwachen und den Identifikationskode der Produkttransporteinheiten registrieren und die Zufuhr von sowie die Nachfrage nach Produkttransporteinheiten bestimmen,
zweite Computermittel den Inventarstatus der Produkttransporteinheiten an einem oder mehreren Distributionspunkten (16) überwachen und den Identifikationskode der Produkttransporteinheiten registrieren und den Vorrat an returnierenden Produkttransporteinheiten bestimmen und die Zustände der einzelnen Produkttransporteinheiten aufnehmen,
zentrale Computermittel (22) den Inventarstatus der Herstellungs- und Distributionsorte empfangen und eine Verteilung der returnierten Produkttransporteinheiten an den Distributionsorten entsprechend den Nachfragen von dem Herstellungsort einleiten.

10. System nach Anspruch 9, **dadurch gekennzeichnet, dass** der Verbrauch und die Zufuhr von Produkttransporteinheiten an jedem Herstellungsort, Distributionspunkt und insgesamt durch erste, zweite bzw. zentrale Computermittel aufgenommen wird.

11. System nach Anspruch 9 oder 10, **dadurch gekennzeichnet, dass** die marktbezogenen Informationen über den Verbrauch der in den Produkttransporteinheiten transportierten Produkten von den zentralen Computermitteln berechnet wird.

12. System nach einem der Ansprüche 9 bis 11, **dadurch gekennzeichnet,**
**dass** das Recycling-Management der zentralen Computermittel das Verwalten von Anlagekonten der Herstellungsorte und der Distributionspunkte und das Belasten der sowie Gutschreiben auf den Konten entsprechend der Bewegung der Produkttransporteinheiten zwischen den Orten durch Registrieren der Identifikations- und Positionsdaten der Produkttransporteinheiten umfasst.

13. System nach einem der Ansprüche 9 bis 12, **dadurch gekennzeichnet, dass** die Datentransporteinheit mit Herstellungsinformationsdaten von einer Quelle in Verbindung mit den ersten Computermitteln versorgt wird und eine Anfrage an ein verbundenes Produktionssystem für Komponenten für das Montieren des Produktes einleitet.

14. System nach Anspruch 13, **dadurch gekennzeichnet, dass** dieder Datenträgereinheit zugeführten Informationsdaten Daten über den Produkttyp, Unterbauteile, Produktidentifikation, Montagetätigkeiten, Aktualisierungen hinsichtlich der Positionund Informationen über die Betriebszeit und Daten, die ein Qualitätskontrolle in Bezug auf eine oder mehrere der Untervorgänge betreffen, umfassen.

15. Wiederverwendbare Produkttransporteinheit, die in einem System für das Management für das Recycling von Produkttransporteinheiten gemäß einem der Ansprüche 9 bis 14 verwendet werden soll, wobei die Produkttransporteinheit ein Grundelement (2) und ein Verkleidungselement (3) umfasst, die durch Abstandsmittel (4) zum Umschließen des Produktes montiert sind, wobei zumindest das Grundelement eine Datenträgereinheit (7) umfasst, um Informationsdaten, die den Inhalt der Produkttransporteinheit, Bestimmungs- und Positionsdaten betreffen, zu empfangen und abzugeben, **dadurch gekennzeichnet, dass** das Grundelement (2) der Produkttransporteinheit während der Herstellung des Produktes auch eine Montageplatte ist, wobei die folgende Verpackung auf dem Grundelement um das fertige Produkt herum gebaut wird und wobei die Datentransporteinheit Informationsdaten über den Montagestatus enthält und mit solchen Daten aktualisiert wird.

16. Wiederverwendbare Produkttransporteinheit nach Anspruch 15, **dadurch gekennzeichnet, dass** das Abstandmittel (4) aus einer Anzahl Rahmenstangen besteht, und wobei das Grundelement und das Verkleidungselement in einer polygonen Form ausgebildet sind und ein Eckelement (5) für jede Ecke des Polygons und eine Anzahl Rahmenelemente (6) umfassen, die die Eckelemente verbinden, wobei zumindest ein Eckelement die Datentransporteinheit (7) umfasst.

17. Wiederverwendbare Produkttransporteinheit nach Anspruch 16, **dadurch gekennzeichnet, dass** jedes Rahmenelement mit einem Eckelement des Grundelementes und des Deckelelementes montiert ist.

18. Wiederverwendbare Produkttransporteinheit nach Anspruch 16 oder 17, **dadurch gekennzeichnet, dass** das Grundelement rechteckig und die Produkttransporteinheit in einer Kistenform montiert wird.

19. Wiederverwendbare Produkttransporteinheit nach einem der Ansprüche 16 bis 18, **dadurch gekennzeichnet, dass** eine oder mehrere der Öffnungen, die von den Rahmenstangen umgeben sind, mit einem Plattenelement versehen ist/sind, das weiterhin an der Innenseite mit einem elastischen Material wie einem Schaummaterial ausgerüstet werden kann, das mit einer dem einzupackenden Produkt entsprechenden Form versehen ist, um für dieses Produkt eine schützende Stütze zur Verfügung zu stellen.

## Revendications

1. Méthode de gestion du recyclage d'unités de support de produits pour l'emballage de protection d'un produit dans laquelle chaque unité de support de produit est munie d'une unité de support de données destinée à recevoir et à envoyer des données d'informations,
**caractérisée en ce que** lesdites données d'informations comprennent un code d'identification, et **en ce que** ladite méthode comprend les étapes consistant à :
surveiller l'état de l'inventaire des unités de support de produits au niveau d'un ou de plusieurs sites de fabrication (10, 11) par un premier ordinateur enregistrant le code d'identification des unités de support de produits, et déterminer la fourniture et la demande d'unités de support de produits,
surveiller l'état de l'inventaire des unités de support de produits au niveau d'un ou de plusieurs points de distribution (16) par un deuxième ordinateur enregistrant le code d'identification des unités de support de produits, déterminer le stock d'unités de support de produits retournées, et enregistrer les états des unités individuelles de support de produits,
entrer ledit état d'inventaire des sites de fabrication et de distribution dans un ordinateur central (22) qui commence la distribution des unités de support de produits retournées au niveau des points de distribution en fonction des demandes provenant du site de fabrication.

2. Méthode selon la revendication 1, **caractérisée en ce que** la consommation et la fourniture d'unités de support de produits sont enregistrées au niveau de chacun des sites de fabrication, des points de distribution et en tout, par le premier et le deuxième ordinateurs et par l'ordinateur central, respectivement.

3. Méthode selon la revendication 1 ou 2, **caractérisée en ce que** des informations liées au marché concernant la consommation des produits que portent les unités de support de produits sont calculées par l'ordinateur central.

4. Méthode selon les revendications 1 à 3, **caractérisée en ce que** la gestion du recyclage par l'ordinateur central implique de gérer les comptes de dépôt des sites de fabrication et des points de distribution, et de débiter et de créditer lesdits comptes en fonction du mouvement des unités de support de produits entre le site en enregistrant les données concernant l'identification et l'emplacement des unités de support de produits.

5. Méthode selon les revendications 1 à 4, **caractérisée en ce que** l'unité de support de données reçoit des données d'informations concernant la fabrication provenant d'une source en association avec le premier ordinateur et envoie une demande à un système de production associé pour des composants en vue de l'assemblage du produit.

6. Méthode selon la revendication 5, **caractérisée en ce que** lesdites données d'informations fournies à l'unité de support de données comprennent des données concernant le type de produit, les sous-composants, l'identification du produit, les opérations d'assemblage, la mise à jour sur l'emplacement, et des informations concernant le temps de fonctionnement et des données concernant un contrôle de qualité en rapport avec une ou plusieurs des sous-opérations.

7. Méthode selon la revendication 1, **caractérisée par** les étapes consistant à :
assembler l'unité de support de produit autour d'un produit, et enregistrer les données d'informations concernant le produit et l'emplacement dans l'unité de support de données,
stocker un ou plusieurs paquets d'unité de support de produit recyclable avec le produit dans un entrepôt ou similaire, et mettre à jour les données concernant l'emplacement dans l'unité de support de données,
charger un ou plusieurs paquets sur un moyen de transport afin de distribuer les paquets à un emplacement déterminé, et mettre à jour les données concernant l'emplacement dans l'unité de support de données,
désassembler l'unité de support de produit et retirer le produit de celle-ci, et
collecter l'unité de support de produit recyclable vide à un point de distribution, où le moyen de support de produit est inspecté, reconditionné, par exemple lavé ou rééquipé d'un nouveau composant, si nécessaire, et trié, avant d'être transporté jusqu'à un site de fabrication en vue d'être réutilisé.

8. Méthode selon la revendication 7, **caractérisée en ce que** le produit est assemblé sur un élément formant base de l'unité de support de produit sur la chaîne de montage d'un processus de fabrication, avant l'assemblage de l'unité de support de produit autour du produit, et **en ce que** l'unité de support de données est fournie dans l'élément formant base et envoie des données d'informations demandant à un système de production des composants pour l'assemblage du produit.

9. Système de gestion du recyclage d'unités de support de produits pour l'emballage de protection d'un produit dans lequel chaque unité de support de produit est munie d'une unité de support de données destinée à recevoir et à envoyer des données d'informations,
**caractérisé en ce que** :
lesdites données d'informations comprennent un code d'identification,
un premier ordinateur surveille l'état de l'inventaire des unités de support de produits au niveau d'un ou de plusieurs sites de fabrication (10, 11) et enregistre le code d'identification des unités de support de produits, et détermine la fourniture et la demande d'unités de support de produits,
un deuxième ordinateur surveille l'état de l'inventaire des unités de support de produits au niveau d'un ou de plusieurs points de distribution (16) et enregistre le code d'identification des unités de support de produits, et détermine le stock d'unités de support de produits retournées, et enregistre les états des unités individuelles de support de produits,
un ordinateur central (22) reçoit ledit état d'inventaire des sites de fabrication et de distribution, et commence la distribution des unités de support de produits retournées au niveau des points de distribution en fonction des demandes provenant du site de fabrication.

10. Système selon la revendication 9, **caractérisé en ce que** la consommation et la fourniture d'unités de support de produits sont enregistrées au niveau de chacun des sites de fabrication, des points de distribution et en tout, par le premier et le deuxième ordinateurs et par l'ordinateur central, respectivement.

11. Système selon la revendication 9 ou 10, **caractérisé en ce que** des informations liées au marché concernant la consommation des produits que portent les unités de support de produits sont calculées par l'ordinateur central.

12. Système selon les revendications 9 à 11, **caractérisé en ce que** la gestion du recyclage par l'ordinateur central implique de gérer les comptes de dépôt des sites de fabrication et des points de distribution, et de débiter et de créditer lesdits comptes en fonction du mouvement des unités de support de produits entre le site en enregistrant les données concernant l'identification et l'emplacement des unités de support de produits.

13. Système selon les revendications 9 à 12, **caractérisé en ce que** l'unité de support de données reçoit des données d'informations concernant la fabrication provenant d'une source en association avec le premier ordinateur et envoie une demande à un système de production associé pour des composants en vue de l'assemblage du produit.

14. Système selon la revendication 13, **caractérisé en ce que** lesdites données d'informations fournies à l'unité de support de données comprennent des données concernant le type de produit, les sous-composants, l'identification du produit, les opérations d'assemblage, la mise à jour sur l'emplacement, et des informations concernant le temps de fonctionnement et des données concernant un contrôle de qualité en rapport avec une ou plusieurs des sous-opérations.

15. Unité de support de produit recyclable destinée à être utilisée dans un système de gestion du recyclage d'unités de support de produits selon l'une quelconque des revendications 9 à 14, ladite unité de support de produit comprenant un élément formant base (2) et un élément formant contenant (3) qui sont assemblés de manière détachable par un moyen de mise à distance (4) afin de renfermer le produit, dans laquelle au moins l'élément formant base comprend une unité de support de données (7) destinée à recevoir et à envoyer des données d'informations concernant le contenu de l'unité de support de produit, et des données concernant la destination et l'emplacement, **caractérisée en ce que** l'élément formant base (2) de ladite unité de support de produit est également un plateau d'assemblage pendant la fabrication du produit, dans laquelle l'emballage ultérieur se fait sur ledit élément formant base autour du produit fini, et dans laquelle l'unité de support de données contient et est mise à jour avec des informations concernant l'état de l'assemblage.

16. Unité de support de produit recyclable selon la revendication 15, **caractérisée en ce que** le moyen de mise à distance (4) est constitué par un certain nombre de barres de cadre, et dans laquelle ledit élément formant base et ledit élément formant contenant sont configurés pour avoir la forme d'un polygone et comprennent un élément formant coin (5) pour chaque coin du polygone et un certain nombre d'éléments de cadre (6) reliant lesdits éléments formant coins, dans laquelle au moins un élément formant coin comprend l'unité de support de données (7).

17. Unité de support de produit recyclable selon la revendication 16, **caractérisée en ce que** chaque barre de cadre est assemblée avec un élément formant coin de l'élément formant base et de l'élément supérieur.

18. Unité de support de produit recyclable selon la revendication 16 ou 17, **caractérisée en ce que** l'élément formant base est rectangulaire et l'unité de support de produit est assemblée en prenant la forme d'une boîte.

19. Unité de support de produit recyclable selon l'une quelconque des revendications 16 à 18, **caractérisée en ce qu'**une ou plusieurs ouvertures délimitées par les barres de cadre sont munies d'un élément formant plaque, et **en ce qu'**elles peuvent en outre être munies d'un matériau souple à l'intérieur, comme un matériau en mousse, ayant une forme correspondant au produit qui doit être emballé afin de fournir un support de protection à ce produit.
